# EUROPEAN PATENT SPECIFICATION

(11) **EP 3 348 464 B1**
(45) Date of publication and mention of the grant of the patent: **06.11.2019**
(21) Application number: 18151491.0
(22) Date of filing: 12.01.2018
(51) Int. Cl.: B62K 11/04, B62K 19/30, B62J 25/00

(54) **MUFFLER SUPPORT STRUCTURE FOR MOTORCYCLE**
SCHALLDÄMPFERAUFHÄNGUNG FÜR MOTORRAD
STRUCTURE DE SUPPORT DE SILENCIEUX POUR MOTOCYCLETTE

(30) Priority: 13.01.2017 JP 2017004591
(43) Date of publication of application: 18.07.2018
(73) Proprietor: HONDA MOTOR CO., LTD., Tokyo 107-8556 (JP)
(72) Inventor: SHIGIHARA, Takashi, Wako-shi, Saitama 351-0193 (JP)
(74) Representative: Dehns

(56) References cited:
- EP-A1- 2 995 539
- CN-C- 100 513 245
- CN-Y- 201 220 727
- JP-A- S6 067 283
- JP-A- 2015 171 891
- JP-U- H0 565 789
- US-A1- 2015 239 520

## Description

The present invention relates to a muffler support structure for a motorcycle.

A known muffler support structure for a motorcycle includes a fastener that is oriented in a vehicle fore-aft direction to thereby support a muffler of a saddled vehicle (see, for example, Japanese Patent No. 4391377).

The saddled vehicle disclosed in Japanese Patent No. 4391377 is a four-wheel, all-terrain vehicle (ATV). Compared with a motorcycle, the saddled vehicle has a great mounting space and a great number of covers and is thus able to support the muffler on a vehicle body thereof without causing appearance to be impaired. Specifically, the vehicle also allows a muffler support portion to be disposed at a position thereinside at which a vehicle body frame is disposed.

Compared with, for example, four-wheel vehicles, motorcycles have a limited mounting space and great emphasis is placed on appearance and it is often the case with the motorcycles that the vehicle body frame is not disposed at a position at which the muffler is to be disposed. A need thus exists for a structure for supporting the muffler without causing appearance to be impaired.

The document CN201220727Y is regarded as the closest prior art and shows the features of the preamble of claim 1.

An object of at least the preferred embodiments of the present invention is to provide a muffler support structure for a motorcycle, capable of disposition of the muffler at a portion not provided with a vehicle body frame and capable of improving appearance.

An aspect of the present invention provides a muffler support structure for a motorcycle, comprising: a muffler fastener including a first fastener to fasten a muffler, wherein the muffler fastener is integrated with a step holder that is fastened to a vehicle body frame, the vehicle body frame includes at least a main frame extending rearwardly from a head pipe and a pivot frame extending from the main frame, and the step holder is fastened to the pivot frame by a pair of second fasteners, characterised in that; the first fastener is oriented in a vehicle fore-aft direction, the muffler fastener is covered in the step holder in a side elevational view, wherein the pair of second fasteners is fastened under a condition of each second fastener being oriented in a vehicle fore-aft direction, the pair of second fasteners is disposed vertically, one above the other, and the first fastener is disposed at a height between the pair of second fasteners.

The pair of second fasteners may be fastened under a condition of being oriented substantially in a horizontal direction in a side elevational view.

The first fastener may be disposed to extend along an axis of the muffler in the side elevational view.

The first fastener may be disposed within a vertical width of the muffler in the side elevational view.

The first fastener may be disposed inside the second fastener in a vehicle width direction in a plan view.

In accordance with the aspect of the present invention, the muffler fastener is integrated with the step holder fastened to the vehicle body frame and is covered, in the vehicle side elevational view, in the step holder, so that the muffler can be supported by the muffler fastener at any given position away from the vehicle body frame. Additionally, in the vehicle side elevational view, the muffler fastener is covered and concealed by the step holder, so that appearance can be improved.

The vehicle body frame includes at least the main frame extending rearwardly from the head pipe and the pivot frame extending from the main frame, and the step holder is fastened to the pivot frame by the second fastener. Thus, compared with an arrangement in which the step holder is fastened to another frame, the step holder can be built compactly.

The pair of second fasteners is fastened under a condition of each second fastener being oriented in the vehicle fore-aft direction, so the muffler can be assembled from the rear of the vehicle without the need to change position on the part of an assembly worker. Thus, workability and productivity can be achieved.

The pair of second fasteners is disposed vertically, one above the other, and the first fastener is disposed at a height between the pair of second fasteners, so the step holder can be evenly supported by two support points of the second fasteners.

In embodiments of the present invention, the pair of second fasteners is fastened under a condition of being oriented substantially in a horizontal direction in the side elevational view. Because the upper and lower second fasteners are fastened in the same direction, workability and productivity can be enhanced.

In the embodiments in which the first fastener is disposed to extend along the axis of the muffler in the side elevational view, workability and productivity during assembling of the muffler can be enhanced.

In embodiments in which the first fastener is disposed within the vertical width of the muffler in the side elevational view, the step holder can be built compactly.

In embodiments in which the first fastener is disposed inside the second fastener in the vehicle width direction in the plan view, when the second fasteners are to be tightened, the muffler fastener is not likely to impede the tightening job.

FIG. 1 is a right side elevational view depicting a motorcycle including a muffler support structure according to an embodiment of the present invention.

FIG. 2 is a right side elevational view depicting the muffler support structure.

FIG. 3 is a plan view depicting the muffler support structure.

FIG. 4 is a perspective view depicting the muffler support structure.

A specific embodiment to which the present invention is applied will be described below by way of example and with reference to the accompanying drawings. Throughout the descriptions given hereunder, longitudinal, lateral, and vertical directions are relative to the vehicle body unless otherwise specified. In the drawings, an arrow FR denotes a vehicle forward direction, an arrow UP denotes a vehicle upward direction, and an arrow LH denotes a vehicle leftward direction.

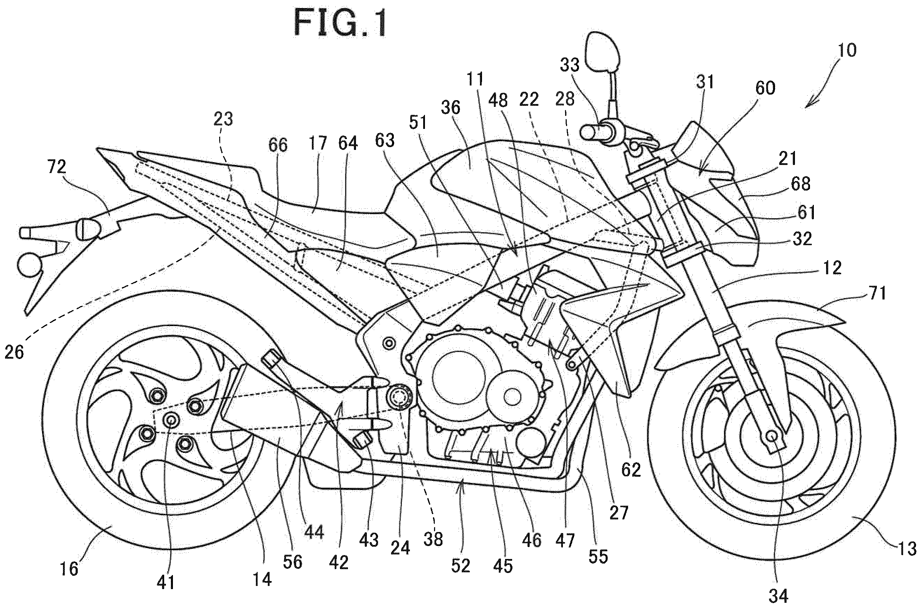

FIG. 1 is a right side elevational view depicting a motorcycle 10 including a muffler support structure according to the embodiment of the present invention.

The motorcycle 10 includes a vehicle body frame 11 that serves as a framework. A front wheel 13 is supported on the vehicle body frame 11 via a front fork 12. A rear wheel 16 is supported on the vehicle body frame 11 via a swing arm 14. A seat 17 is supported on an upper portion of the vehicle body frame 11.

The vehicle body frame 11 includes a head pipe 21, a pair of left and right main frames 22, a pair of left and right seat rails 23, a pair of left and right pivot frames 24, a pair of left and right sub-frames 26, and a pair of left and right down frames 27.

The front fork 12 is rotatably supported on the head pipe 21. The front fork 12 includes a top bridge 31 and a bottom bridge 32 that connect left and right parts of the front fork 12. A handlebar 33 is mounted on an upper surface of the top bridge 31. The front wheel 13 is supported at a lower end portion of the front fork 12 via an axle 34.

The main frames 22 extend from the head pipe 21 downwardly toward the rear. A fuel tank 36 is supported at upper portions of the main frames 22. The seat rails 23 extend from rear portions of the main frames 22 upwardly toward the rear and support the seat 17. The pivot frames 24 extend downwardly from rear ends of the main frames 22. A pivot shaft 38 extending in a vehicle width direction is supported on the left and right pivot frames 24. The swing arm 14 is supported by the pivot shaft 38 vertically swingably. The swing arm 14 has a rear end portion supporting the rear wheel 16 via an axle 41. A step holder 42 is attached on a lower portion of the pivot frame 24 on a first lateral side (right side). A rider step 43 is mounted on a lower end portion of the step holder 42 and a passenger step 44 is mounted on a rear end portion of the step holder 42.

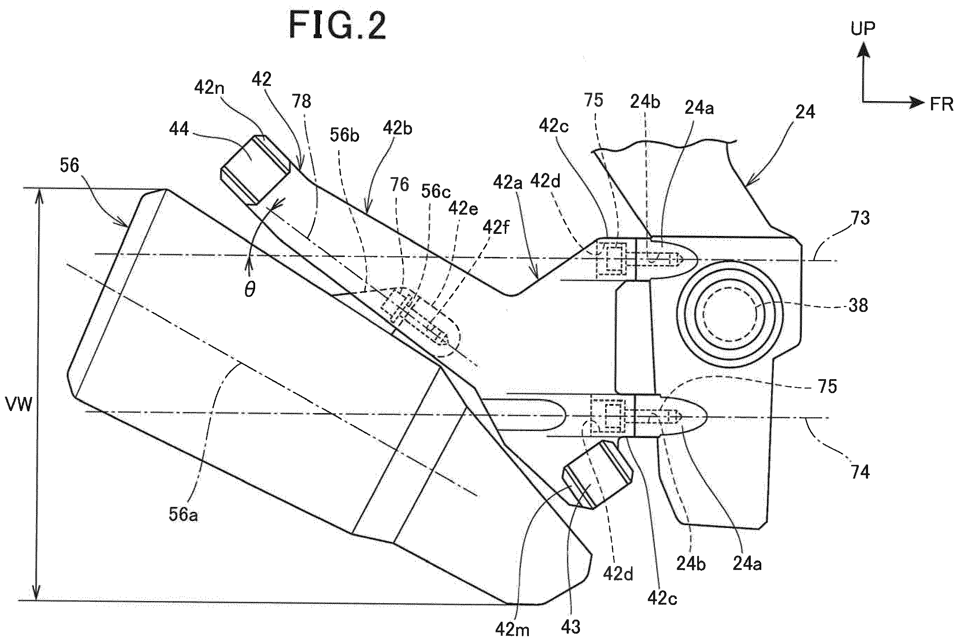

A step holder (not depicted) having a basic structure identical to a basic structure of the step holder 42 and having a shape symmetrical with respect to the step holder 42 is mounted at a lower portion of the pivot frame 24 on a second lateral side (left side). In the step holder on the second lateral side, a muffler fastener 42e (see FIG. 2), described later, is not disposed.

The sub-frames 26 are connected with upper portions of the pivot frames 24 and rear end portions of the seat rails 23. The down frames 27 extend from reinforcement frames 28 disposed across the head pipe 21 and the main frames 22 downwardly toward the rear in a space inferior to the main frames 22.

An engine 45 is supported by the pivot frames 24 and the down frames 27.

The engine 45 includes a crankcase 46 and a cylinder portion 47 extending upwardly from a front portion of the crankcase 46. The cylinder portion 47 includes a cylinder head 48. An intake system 51 is connected with a rear portion of the cylinder head 48 and an exhaust system 52 is connected with a front portion of the cylinder head 48. The exhaust system 52 includes an exhaust pipe 55 connected with the cylinder head 48 and a muffler 56 connected with a rear end portion of the exhaust pipe 55.

The muffler 56 is disposed inferior to, and supported by, the step holder 42. The muffler 56 overlaps the swing arm 14 in a vehicle side elevational view and is disposed at a low position in the vehicle body. The foregoing arrangement results in the muffler 56 being disposed closer to the pivot frames 24 than to the seat rails 23. Thus, supporting the muffler 56 with the step holder 42 mounted on the pivot frames 24 helps prevent the step holder 42 from becoming large in size, which is convenient.

The vehicle body frame 11 has an upper portion covered in a vehicle body cover 60.

The vehicle body cover 60 includes a front cover 61, a pair of left and right radiator shrouds 62, a pair of left and right front side covers 63, a pair of left and right rear side covers 64, and a pair of left and right rear covers 66.

The front cover 61 covers an upper portion of the front fork 12 from the front and covers an area around a headlight 68. The radiator shrouds 62 laterally cover parts of the main frames 22 and the down frames 27 and a radiator (not depicted). The front side covers 63 laterally cover the main frames 22 and the seat rails 23. The rear side covers 64 and the rear covers 66 laterally cover the seat rails 23 and the sub-frames 26.

The front wheel 13 is covered in a front fender 71 from above and the rear wheel 16 is covered in a rear fender 72 from above.

FIG. 2 is a right side elevational view depicting a support structure for the muffler 56.

The pivot frame 24 includes a pair of step mounting portions 24a spaced vertically apart from each other at a rear edge portion thereon. The step mounting portions 24a each have a threaded hole 24b extending in the vehicle body fore-aft direction. The pivot shaft 38 is disposed between an axis 73 of the upper threaded hole 24b and an axis 74 of the lower threaded hole 24b. The axes 73 and 74 extend substantially horizontally along the vehicle fore-aft direction and are disposed in parallel with each other.

The step holder 42 integrates a holder front portion 42a attached to the pivot frame 24 with a holder rear portion 42b that extends from the holder front portion 42a obliquely upwardly toward the rear to thereby support the muffler 56.

The holder front portion 42a includes a pair of vehicle body fasteners 42c spaced vertically apart from each other and disposed at a front end portion thereof. The vehicle body fasteners 42c each have a bolt pass-through hole 42d formed to extend in the vehicle body fore-aft direction.

The vehicle body fasteners 42c are each fastened to the step mounting portion 24a of the pivot frame 24 by a holder mounting bolt 75. Under a condition in which the step holder 42 is fastened, the holder mounting bolts 75 each extend in the vehicle fore-aft direction, specifically, the holder mounting bolts 75 are each oriented in the vehicle fore-aft direction. Additionally, the holder front portion 42a includes a lower step support 42m disposed at a lower end portion thereof. The lower step support 42m supports the rider step 43.

The holder rear portion 42b includes a muffler fastener 42e integrally formed therewith in an inner surface thereof. The muffler fastener 42e supports the muffler 56. Thus, the muffler fastener 42e is laterally covered in the holder rear portion 42b. The holder rear portion 42b further includes a rear step support 42n disposed at a rear end portion thereof. The rear step support 42n supports the passenger step 44.

The muffler 56 has an axis 56a that passes through the center of a transverse cross section thereof to extend in the longitudinal direction of the muffler 56. The muffler fastener 42e has a threaded hole 42f formed to extend along the axis 56a of the muffler 56. The threaded hole 42f has an axis 78 that is inclined upwardly toward the rear at an angle θ with respect to the axes 73 and 74 of the threaded holes 24b.

The muffler fastener 42e is disposed between the step mounting portions 24a of the pivot frame 24 in the vertical direction.

The muffler 56 includes a step fastener 56b disposed at an upper portion thereof. The step fastener 56b is fastened to the muffler fastener 42e of the step holder 42. The step fastener 56b has a bolt pass-through hole 56c formed therein. The step fastener 56b is fastened to the muffler fastener 42e by a muffler mounting bolt 76. Thus, a good part of the step fastener 56b is covered laterally in the holder rear portion 42b. Under a condition in which the step fastener 56b is fastened, the muffler mounting bolt 76 extends in the vehicle fore-aft direction, specifically, extends downwardly toward the front. Specifically, the muffler mounting bolt 76 is oriented downwardly toward the front.

The muffler fastener 42e, the step fastener 56b, and the muffler mounting bolt 76 are disposed between the step mounting portions 24a of the pivot frame 24 in a height direction (vertical direction) and within a vertical width VW of the muffler 56 in the height direction.

As described previously, the muffler fastener 42e and the step fastener 56b are disposed on the inside in the vehicle width direction of the holder rear portion 42b of the step holder 42. This arrangement results in the fastening portion between the muffler fastener 42e and the step fastener 56b being invisible from a lateral side of the vehicle body for improved appearance. Additionally, there is no likelihood that the fastening portion will interfere with legs on the rider step 43 and the passenger step 44.

As described above, the motorcycle 10 (see FIG. 1) includes the muffler fastener 42e that fastens the muffler 56 using the muffler mounting bolt 76 as a first fastener that is oriented in the vehicle fore-aft direction. The muffler fastener 42e is integrated with the vehicle body frame 11, specifically, the step holder 42 fastened to the pivot frame 24 and is covered in the step holder 42 in the vehicle side elevational view. The foregoing arrangement results in the muffler fastener 42e being integrated with the step holder 42. Thus, the muffler fastener 42e can be fastened and supported by the vehicle body frame 11, specifically, at any given position away from the pivot frame 24. Additionally, in the vehicle side elevational view, the muffler fastener 42e is covered in, and concealed by, the step holder 42, specifically, the holder rear portion 42b, so that appearance can be improved.

As depicted in FIGS. 1 and 2, the vehicle body frame 11 includes at least the main frames 22 extending rearwardly from the head pipe 21, the pivot frames 24 extending downwardly from the rear ends of the main frames 22, and the seat rails 23 extending rearwardly from the main frames 22 to thereby support the seat 17. The step holder 42 is fastened to the pivot frame 24 by the holder mounting bolts 75 as second fasteners.

The foregoing arrangement enables the step holder 42 to be built compactly for the following reason. Specifically, the step holder 42 is fastened to the pivot frame 24 and, compared with an arrangement in which the step holder is fastened to the seat rails 23 disposed farther away from the muffler 56 (specifically, the step fastener 56b), the pivot frame 24 is close to the muffler 56 (specifically, the step fastener 56b), so that the step holder 42 can be built compactly.

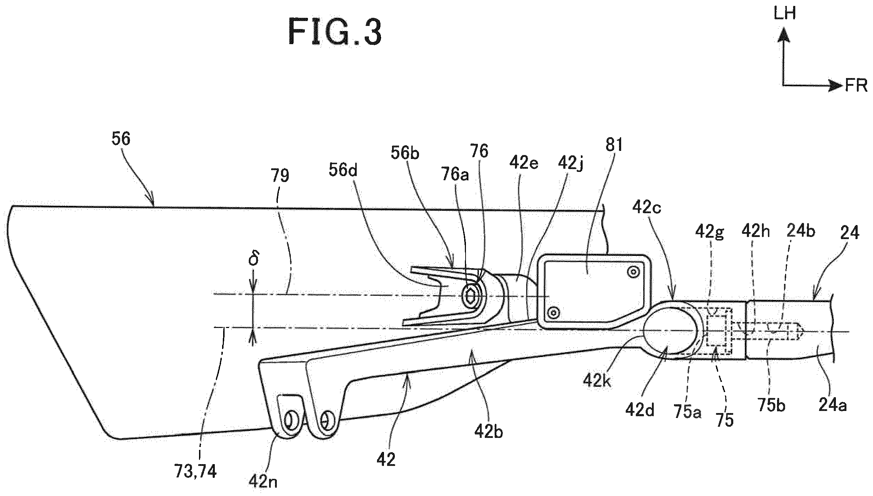

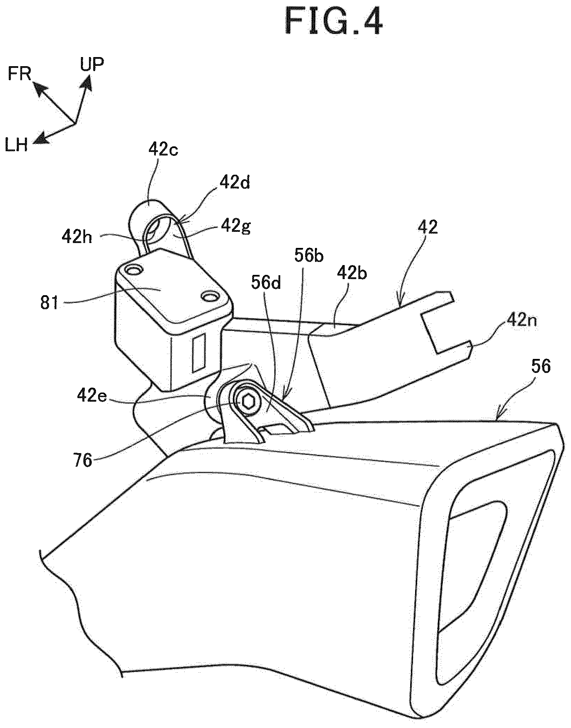

FIG. 3 is a plan view depicting the support structure for the muffler 56. FIG. 4 is a perspective view depicting the support structure for the muffler 56.

As depicted in FIGS. 3 and 4, the vehicle body fastener 42c has the bolt pass-through hole 42d through which the holder mounting bolt 75 is passed. The bolt pass-through hole 42d includes a large-diameter hole 42g and a small-diameter hole 42h. The large-diameter hole 42g opens toward the rear of the vehicle. The small-diameter hole 42h is disposed anterior to the large-diameter hole 42g. The large-diameter hole 42g has a rear end assuming an opening 42k that opens to the rear.

The large-diameter hole 42g has an inside diameter greater than an outside diameter of a head 75a of the holder mounting bolt 75. The small-diameter hole 42h has an inside diameter smaller than the outside diameter of the head 75a of the holder mounting bolt 75 and greater than an outside diameter of a shank 75b of the holder mounting bolt 75. The head 75a of the holder mounting bolt 75 is generally housed inside the large-diameter hole 42g and is thus not visible from the above.

The muffler fastener 42e is integrally formed on an inner surface 42j of the holder rear portion 42b of the step holder 42 so as to protrude inwardly in the vehicle width direction. The muffler fastener 42e is covered laterally in the holder rear portion 42b.

The step fastener 56b of the muffler 56 has a rear end portion in which a recess 56d is formed. The muffler mounting bolt 76 has a head 76a housed inside the recess 56d. Thus, only part of the head 76a of the muffler mounting bolt 76 is visible from above.

The holder rear portion 42b of the step holder 42 is disposed to be gradually on the outside in the vehicle width direction toward the rear of the vehicle. This arrangement allows the muffler mounting bolt 76 to be easily inserted in the bolt pass-through hole 56c in the step fastener 56b when the step fastener 56b of the muffler 56 is to be fastened to the muffler fastener 42e of the step holder 42 by the muffler mounting bolt 76. Additionally, when the muffler mounting bolt 76 is to be tightened using a tool, the tool and a hand holding the tool can be prevented from interfering with the holder rear portion 42b, so that workability can be enhanced.

A straight line 79 that overlaps, in a plan view, the axis 78 (see FIG. 2) of the threaded hole 42f (see FIG. 2) of the muffler mounting bolt 76 extends in the vehicle fore-aft direction to be offset only by δ to the inside in the vehicle width direction relative to the axes 73 and 74.

The muffler fastener 42e of the step holder 42 is disposed superior, in the vehicle side elevational view, to the vehicle body fastener 42c of the step holder 42 as depicted in FIG. 2 and is disposed on the inside in the vehicle width direction of the vehicle body fastener 42c as depicted in FIG. 3.

As a result, when the vehicle body fastener 42c is to be fastened to the step mounting portion 24a of the pivot frame 24 by the holder mounting bolt 75, the muffler fastener 42e is not likely to impede the fastening job, so that workability can be enhanced.

A master cylinder 81 connected with a brake pedal (not depicted) is mounted on the step holder 42 anterior to the muffler fastener 42e. A good part of the master cylinder 81 is disposed on the inside in the vehicle width direction of the holder rear portion 42b and thus the master cylinder 81 can be protected by the holder rear portion 42b.

As depicted in FIG. 2 described above, the holder mounting bolts 75 are fastened under a condition of being oriented in the vehicle fore-aft direction. Thus, both the muffler mounting bolt 76 and the holder mounting bolts 75 are fastened under a condition of being oriented in the vehicle fore-aft direction, so that an assembly worker can assemble the muffler 56 from the rear of the vehicle without the need to change his or her position. Thus, workability and productivity can be achieved.

Additionally, the holder mounting bolts 75 are disposed vertically in pairs, one above the other, and the muffler mounting bolt 76 is disposed at a height between the pair of holder mounting bolts 75. The step holder 42 and the muffler 56 can thus be evenly supported by two support points of the holder mounting bolts 75.

Additionally, the pair of holder mounting bolts 75 is fastened under a condition of being oriented in a substantially horizontal direction in a side elevational view. Because the upper and lower holder mounting bolts 75 are fastened in the same direction, workability and productivity can be enhanced.

Further, the muffler mounting bolt 76 is disposed so as to extend along the axis 56a of the muffler 56 inclined upwardly toward the rear in the vehicle side elevational view. The muffler mounting bolt 76 can thus be easily tightened from the rearward direction of the vehicle. This enhances workability and productivity.

Further, the muffler mounting bolt 76 is disposed within the vertical width VW of the muffler 56 in the vehicle side elevational view, so that the step holder 42 can be built compactly.

As depicted in FIG. 3 described above, the muffler mounting bolt 76 is disposed on the inside in the vehicle width direction of the holder mounting bolts 75 in the plan view. Thus, when the holder mounting bolts 75 are to be tightened, the muffler fastener 42e is not likely to impede the tightening job.

While the present invention has been particularly described with reference to a specific illustrative embodiment, it will be understood that the invention may be embodied in other specific forms without departing from the invention which is defined by the claims.

For example, in the above-described embodiment, the axes 73 and 74, and the axis 78 are disposed to be inclined at the angle θ with respect to each other. This arrangement is, however, illustrative only and not limiting. The axis 78 may nonetheless be disposed to extend along the substantially horizontal axes 73 and 74. Alternatively, the axes 73 and 74 may be disposed to extend along the axis 78 that is inclined upwardly toward the rear.

### [Description of Reference Symbols]

- 10:: Motorcycle
- 11:: Vehicle body frame
- 17:: Seat
- 21:: Head pipe
- 22:: Main frame
- 23:: Seat rail
- 24:: Pivot frame
- 42:: Step holder
- 42e:: Muffler fastener
- 56:: Muffler
- 56a:: Axis
- 75:: Bolt (second fastener)
- 76:: Bolt (first fastener)

## Claims

1. A muffler support structure for a motorcycle, comprising:
a muffler fastener (42e) including a first fastener (76) to fasten a muffler (56), wherein
the muffler fastener (42e) is integrated with a step holder (42) that is fastened to a vehicle body frame (11),
the vehicle body frame (11) includes at least a main frame (22) extending rearwardly from a head pipe (21) and a pivot frame (24) extending from the main frame (22), and
the step holder (42) is fastened to the pivot frame (24) by a pair of second fasteners (75) which are disposed vertically, one above the other, and
the first fastener (76) is disposed at a height between the pair of second fasteners (75),
**characterised in that**;
the first fastener is oriented in a vehicle fore-aft direction,
the muffler fastener (42e) is covered in the step holder (42) in a side elevational view,
wherein the pair of second fasteners (75) is fastened under a condition of each second fastener being oriented in a vehicle fore-aft direction.

2. A muffler support structure for a motorcycle according to claim 1, wherein the pair of second fasteners (75) is fastened under a condition of being oriented substantially in a horizontal direction in a side elevational view.

3. A muffler support structure for a motorcycle according to claim 1 or 2, wherein the first fastener (76) is disposed to extend along an axis (56a) of the muffler (56) in the side elevational view.

4. A muffler support structure for a motorcycle according to any one of claims 1 to 3, wherein the first fastener (76) is disposed within a vertical width of the muffler (56) in the side elevational view.

5. A muffler support structure for a motorcycle according to any one of claims 1 to 4, wherein the first fastener (76) is disposed inside the second fastener (75) in a vehicle width direction in a plan view.

6. A muffler support structure for a motorcycle according to any one of claims 1 to 5, wherein a rider step (43) is mounted on a lower end portion of the step holder (42).

7. A muffler support structure for a motorcycle according to any one of claims 1 to 6, wherein a passenger step (44) is mounted on a rear end portion of the step holder (42).

8. A muffler support structure for a motorcycle according to claims 6 and 7, wherein the first fastener is located in the middle of a straight line between the rider step (43) and the passenger step (44) in a side elevational view.

## Patentansprüche

1. Schalldämpferaufhängung für ein Motorrad, umfassend:
ein Schalldämpfer-Befestigungselement (42e), das ein erstes Befestigungselement (76) beinhaltet, um einen Schalldämpfer (56) zu befestigen, wobei
das Schalldämpfer-Befestigungselement (42e) mit einem Tritthalter (42) integriert ist, der an einem Fahrzeugkarosserierahmen (11) befestigt ist,
der Fahrzeugkarosserierahmen (11) mindestens einen Hauptrahmen (22) beinhaltet, der sich von einem Kopfrohr (21) nach hinten erstreckt, und einen Schwenkrahmen (24), der sich vom Hauptrahmen (22) erstreckt, und
der Tritthalter (42) an dem Schwenkrahmen (24) durch ein Paar von zweiten Befestigungselementen (75) befestigt ist, die vertikal übereinander angeordnet sind, und
das erste Befestigungselement (76) auf einer Höhe zwischen dem Paar von zweiten Befestigungselementen (75) angeordnet ist,
**dadurch gekennzeichnet, dass**;
das erste Befestigungselement in einer Fahrzeug-Vorne-Hinten-Richtung ausgerichtet ist,
das Schalldämpfer-Befestigungselement (42e) in einer Seitenansicht in dem Tritthalter (42) abgedeckt ist,
wobei das Paar von zweiten Befestigungselementen (75) unter einer Bedingung befestigt ist, dass jedes zweite Befestigungselement in einer Fahrzeug-Vorne-Hinten-Richtung ausgerichtet ist.

2. Schalldämpferaufhängung für ein Motorrad nach Anspruch 1, wobei das Paar von zweiten Befestigungselementen (75) unter einer Bedingung befestigt ist, dass es im Wesentlichen in einer horizontalen Richtung in einer Seitenansicht ausgerichtet ist.

3. Schalldämpferaufhängung für ein Motorrad nach Anspruch 1 oder 2, wobei das erste Befestigungselement (76) angeordnet ist, um sich entlang einer Achse (56a) des Schalldämpfers (56) in der Seitenansicht zu erstrecken.

4. Schalldämpferaufhängung für ein Motorrad nach einem der Ansprüche 1 bis 3, wobei das erste Befestigungselement (76) in einer vertikalen Breite des Schalldämpfers (56) in der Seitenansicht angeordnet ist.

5. Schalldämpferaufhängung für ein Motorrad nach einem der Ansprüche 1 bis 4, wobei das erste Befestigungselement (76) innerhalb des zweiten Befestigungselements (75) in einer Fahrzeugbreitenrichtung in einer Draufsicht angeordnet ist.

6. Schalldämpferaufhängung für ein Motorrad nach einem der Ansprüche 1 bis 5, wobei ein Fahrertritt (43) auf einem unteren Endabschnitt des Tritthalters (42) angebracht ist.

7. Schalldämpferaufhängung für ein Motorrad nach einem der Ansprüche 1 bis 6, wobei ein Beifahrertritt (44) auf einem hinteren Endabschnitt des Tritthalters (42) angebracht ist.

8. Schalldämpferaufhängung für ein Motorrad nach Ansprüchen 6 und 7, wobei das erste Befestigungselement in der Mitte einer geraden Linie zwischen dem Fahrertritt (43) und dem Beifahrertritt (44) in einer Seitenansicht gelegen ist.

## Revendications

1. Structure de support de silencieux pour une motocyclette, comprenant :
une fixation de silencieux (42e) incluant une première fixation (76) pour fixer un silencieux (56), dans laquelle
la fixation de silencieux (42e) est intégrée à un marchepied (42) qui est fixé à un cadre de carrosserie de véhicule (11),
le cadre de carrosserie de véhicule (11) inclut au moins un cadre principal (22) s'étendant vers l'arrière depuis un tube de tête (21) et un cadre pivot (24) s'étendant depuis le cadre principal (22), et
le marchepied (42) est fixé au cadre pivot (24) par une paire de secondes fixations (75) qui sont disposées verticalement, l'une au-dessus de l'autre, et la première fixation (76) est disposée à une hauteur entre la paire de secondes fixations (75),
**caractérisée en ce que** ;
la première fixation est orientée dans un sens avant-arrière du véhicule,
la fixation de silencieux (42e) est recouverte dans le marchepied (42) dans une vue en élévation de côté,
dans laquelle la paire de secondes fixations (75) est fixée dans une condition dans laquelle chaque seconde fixation est orientée dans un sens avant-arrière du véhicule.

2. Structure de support de silencieux pour une motocyclette selon la revendication 1, dans laquelle la paire de secondes fixations (75) est fixée dans une condition dans laquelle elle est orientée sensiblement dans un sens horizontal dans une vue en élévation de côté.

3. Structure de support de silencieux pour une motocyclette selon la revendication 1 ou 2, dans laquelle la première fixation (76) est disposée pour s'étendre le long d'un axe (56a) du silencieux (56) dans la vue en élévation de côté.

4. Structure de support de silencieux pour une motocyclette selon l'une quelconque des revendications 1 à 3, dans laquelle la première fixation (76) est disposée à l'intérieur d'une largeur verticale du silencieux (56) dans la vue en élévation de côté.

5. Structure de support de silencieux pour une motocyclette selon l'une quelconque des revendications 1 à 4, dans laquelle la première fixation (76) est disposée à l'intérieur de la seconde fixation (75) dans un sens de largeur du véhicule dans une vue en plan.

6. Structure de support de silencieux pour une motocyclette selon l'une quelconque des revendications 1 à 5, dans laquelle un cale-pied de pilote (43) est monté sur une portion d'extrémité inférieure du marchepied (42).

7. Structure de support de silencieux pour une motocyclette selon l'une quelconque des revendications 1 à 6, dans laquelle un cale-pied de passager (44) est monté sur une portion d'extrémité arrière du marchepied (42).

8. Structure de support de silencieux pour une motocyclette selon les revendications 6 et 7, dans laquelle la première fixation est située au milieu d'une ligne droite entre le cale-pied de pilote (43) et le cale-pied de passager (44) dans une vue en élévation de côté.
